(19) **Europäisches Patentamt**
**European Patent Office**
**Office européen des brevets**

(11) **EP 2 165 980 B1**

(12) **EUROPEAN PATENT SPECIFICATION**

(45) Date of publication and mention
of the grant of the patent:
**08.06.2016 Bulletin 2016/23**

(51) Int Cl.:
*C02F 1/66* *(2006.01)*   *C02F 1/56* *(2006.01)*
*C02F 1/38* *(2006.01)*   *C02F 1/00* *(2006.01)*
*B01D 21/26* *(2006.01)*   *C02F 1/52* *(2006.01)*
*C02F 9/00* *(2006.01)*

(21) Application number: **09170675.4**

(22) Date of filing: **18.09.2009**

(54) **Method and system for seeding with mature floc to accelerate aggregation in a water treatment process**

Verfahren und System zum Säen von ausgereiften Flocken zur Beschleunigung der Zusammensetzung in einem Wasserbehandlungsverfahren

Procédé et système de semoir avec floc mature pour accélérer l'agrégation dans un processus de traitement de l'eau

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.09.2008 US 234373**

(43) Date of publication of application:
**24.03.2010 Bulletin 2010/12**

(60) Divisional application:
**12190390.0 / 2 594 533**

(73) Proprietor: **Palo Alto Research Center Incorporated**
**Palo Alto, California 94304 (US)**

(72) Inventors:
• **Lean, Meng H.**
**Santa Clara, CA 95054 (US)**

• **Volkel, Armin R.**
**Mountain View, CA 94040 (US)**
• **Kole, Ashutosh**
**Sunnyvale, CA 94086 (US)**
• **Seo, Jeonggi**
**Albany, CA 94706 (US)**

(74) Representative: **Grünecker Patent- und Rechtsanwälte**
**PartG mbB**
**Leopoldstraße 4**
**80802 München (DE)**

(56) References cited:
**EP-A2- 1 942 329       WO-A1-89/01357**
**WO-A1-2004/103916   US-A1- 2004 149 662**

Printed by Jouve, 75001 PARIS (FR)

**Description**

BACKGROUND

The core elements of conventional water treatment include the sequential process steps of coagulation, flocculation, sedimentation and physical filtration. Typically, chemical coagulants are used to screen Coulomb repulsion and promote aggregation of sub-micron particulates into pin flocs.

Flocculants in the form of long chain polymers can then be added to anchor the flocs to form larger entities that settle faster in the sedimentation basin. The hydraulic retention time through the first 3 stages may be 5-10 hours, depending on the input water quality and the facility.

A transformative approach to the practice of conventional water treatment has been taught in the two related applications noted above. Features of this approach include: high scalability, modularity, small footprint, high throughput, purely fluidic, continuous flow, membrane-less, size selective cut-off, and accelerated agglomeration kinetics. The system will work with particulates of any density, including those with neutral buoyancy. These features allow reduced coagulant dosage by 50% to achieve the same turbidity reduction; which may be attributed to the compact and self-limiting narrow size distribution of pin flocs resulting from fluid shear effects. The combined effects allow for extraction of micron sized pin flocs in fluidic structures to potentially eliminate flocculation and sedimentation steps, resulting in significant savings through reduced land and chemical cost, operational overhead, and faster processing time from raw to finished water.

A major design consideration is the aggregation time to grow the pin flocs compared to the hydraulic retention time of the system. For in-line pin floc formation and subsequent removal with the spiral separator, it would be preferred that the two time scales be comparable or at least the difference between these two time scales be minimized.

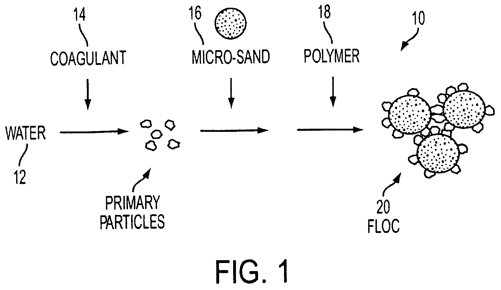

Figure 1 shows a ballasted flocculation technique used in a known commercial system, referred to as *ActiFlo* by Veolia, which solves this problem by introducing micro-sand as seed particles in the coagulation step to accelerate aggregation and sedimentation. The large 120um micro-sand provides more surface area for aggregation. The higher density of 2.65 also promotes more rapid sedimentation.

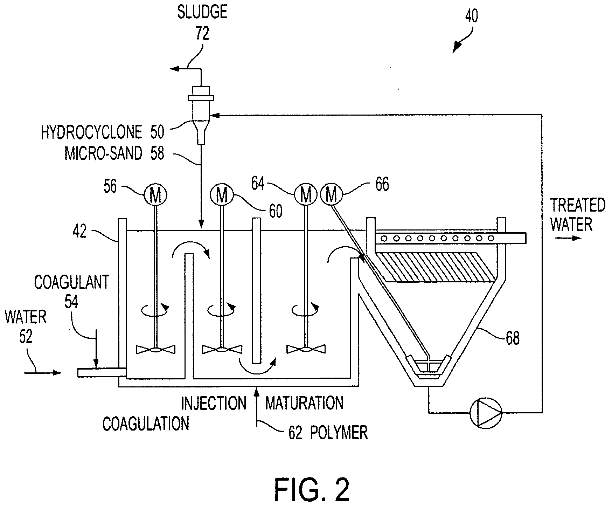

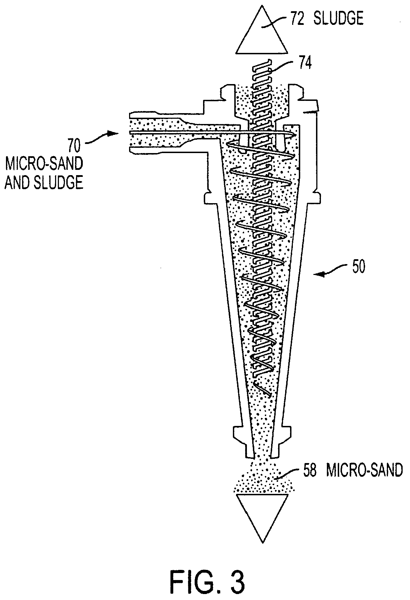

As shown, process 10 is illustrated wherein water is injected into the system (at 12) and then coagulant is added (at 14). From this combination, primary particles are formed to which micro-sand is added (at 16). Polymer material is then added (at 18) to form the floc (at 20). It should be appreciated that the particles or floc in this conventional system are attached to the micro-sand. As will be illustrated in greater detail in Figures 2 and 3, the system has a number of disadvantages. For example, the combination of primary particles and micro-sand requires feedback and recycling to remove the floc or primary particles from the micro-sand, clean the micro-sand and re-inject the micro-sand into the system for further processing. Because the recycling of the micro-sand is not 100% efficient, a steady supply of new micro-sand has to be added, which results in added cost in material and infrastructure.

Figures 2 and 3 show a schematic of the micro-sand recycling system. The system 40 includes a processing unit 42 and a hydrocyclone device 50. In operation, water 52 is injected into the system along with coagulant 54. A mixer 56 mixes the water 53 and the coagulant 54. This mixed combination then has micro-sand 58 added thereto by the hydrocyclone device 50. A mixer 60 then mixes the micro-sand 58 with the water 52 and coagulant 54 combination. A polymer 62 is then added to the mix. It is then mixed with a mixer 64 and delivered to a tank 68 of the unit 42. A mixer 66 is used to mix the material that is delivered to the tank 68 and treated water is skimmed from the top of the tank 68. Notably, the material containing the micro-sand mixture is fed back from the bottom of tank 68 through a feedback line 70 to the hydrocyclone device 50. The hydrocyclone device 50 operates to separate micro-sand 58 from sludge 72.

In this regard, with reference to Figure 3, hydrocyclone device 50 is illustrated. As shown, the device includes an inlet for feedback line 70 and outlets for sludge 72 and micro-sand 58. It should be appreciated that a threaded spiral stem 74 acts on the material to separate the sludge 72 from the micro-sand 58.

The advantage of this known technology is that process time and foot print are reduced. The disadvantages are the need to recover the micro-sand, which is granular and insoluble, using hydrocyclones and the need for additional power for the micro-sand pumps.

WO 2004/103916 discloses systems for the removal of solids from fluids and methods of using the same. The system includes a maturing area in fluid communication with a separation device. In the maturation area, one or more additives are added to the fluid to create formed and enlarged particles from the particulates in the fluid. In the subsequent separation device, the particles are separated from the fluid.

WO 89/ 01357 discloses a process for clarifying liquors containing suspended solids. The clarification process is characterized by the addition of flocculent and inert particulate material so as to cause the formation of floc.

US 2004/0149662 relates to a method of treating oil-containing waste water. The method includes the step of adding a high-catonic flocculant consisting of a high-molecular material, so that at least one fouling component disposed in the water is flocculated to form a sludge consisting of flocks and thereby separate the at least one fouling component and the water from each other.

**Summary of the Invention**

It is the object of the present invention to improve system and method for treatment of water. This object is achieved by a system for treatment of water according to claim 1 and a method for for treatment of water according to claim 5. Embodiments of the invention are set forth in the dependent claims.

BRIEF DESCRIPTION OF THE DRAWINGS

FIGURE 1 is a representative view of prior art;
FIGURE 2 is a representative view of prior art;
FIGURE 3 is a representative view of prior art;
FIGURE 4 is a representative view of a system according to the presently described embodiments;
FIGURE 5 is a representation of data generated according to the presently described embodiments;
FIGURE 6 is a representative view of a system according to the presently described embodiments;
FIGURE 7 is a representation of data generated according to the presently described embodiments;
FIGURE 8 is a representation of data generated according to the presently described embodiments;
FIGURE 9 is a representative view of a spiral device incorporated into the presently described embodiments; and,
FIGURE 10 is a view of a spiral device incorporated into the presently described embodiments.

DETAILED DESCRIPTION

The presently described embodiments are directed to a system and method that circumvent the micro-sand used by the previously described system by introducing mature floc (such as floc that is processed, e.g., for approximately 30 minutes or less) as seed particles to promote aggregation of smaller pin flocs, which are formed soon after mixing of source water and coagulant. It should be understood that the mature floc typically are large aggregates that are either extracted or recycled from the waste stream of the spiral separator or generated in another tank from coagulant and organic and/or inorganic nano-particles, for example, those that are naturally occurring in source waters. As such, the seed particles do not need to be recovered as they separate out with the waste stream after spiral separation. The additional chemicals to form the seed floc can be off-set by the 50% reduction in chemical dosage for coagulation. One implementation method is to prepare the mature floc off-line and inject periodically into the buffer tank as needed. Another embodiment is to feedback the more mature downstream floc as needed to the buffer tank. Mature floc may take a variety of forms as it is a function of relative age and the system into which it is implemented. In one form contemplated herein, mature floc has a size above the cut-off size of a spiral separator used in the process. As a point of reference, flocs above the cut-off size have dimensions such that they will be taken out of the separator in the waste stream. Also, for at least some applications contemplated herein, 30 minutes of maturing is sufficient; however, shorter durations are obtainable and often desired. For example, floc maturing for 4 minutes is sufficient for some applications. In this regard, in at least some forms, the age of the mature floc is minimized to allow optimal aggregation of small particles which is controlled by both size and concentration of aged floc.

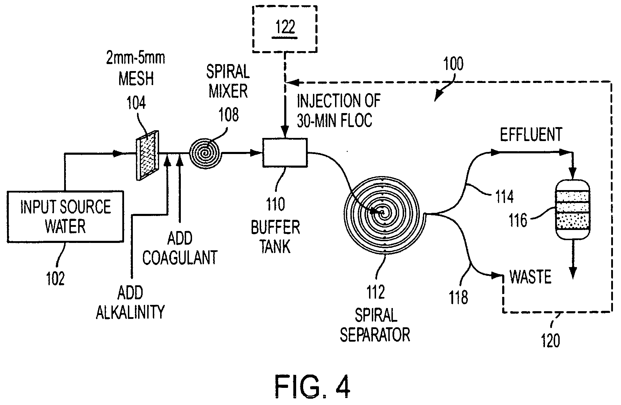

Figure 4 shows a schematic of a water treatment system using spiral separation according to the presently described embodiments. Alkalinity is added in-line in the form of a base just before the coagulant. This is to adjust the pH of the source water throughout the process. Coagulant is introduced prior to mixing in a spiral mixer, followed by mature floc injection into the buffer tank prior to spiral separation and extraction of the flocs. This basic technique allows for the objectives of the presently described embodiments to be achieved.

In this regard, an exemplary system 100 according to the presently described embodiments is illustrated. The system 100 receives source water at a suitable inlet (shown representatively) from an input water source 102 that is, in one form, flowed through a mesh filter 104. It should be appreciated that the mesh filter 104 is designed to filter out relatively large particles from the input water. In this regard, the filter 104 may be formed of a 2mm - 5mm mesh material. In at least one form, alkalinity is added in the form of a base to the input water after filtering by the mesh filter 104 to adjust for the pH. Any suitable base may be used. In at least one form, coagulant may be added to the input water after the base is added. Any suitable coagulant may be used.

The system 104 also includes a mixer 108, e.g. a spiral mixer that receives the input water and the coagulant. The spiral mixer shown in Figure 4 serves a dual purpose. First, it provides the flash mixing function where the incoming fluid is angled at the inlet to cause chaotic mixing when it impinges on the lower wall of the spiral channel. Secondly, the high shear driven flow in the channel is designed to achieve a shear rate which limits the rapid growth of loose floc. The resulting floc is dense and uniform within a narrow size range. This dense uniformly sized floc ensures rapid aggregation. The mixer 108 has an output that connects to a buffer tank 110. The mixer 108 may take a variety of forms;

however, in one form, the noted spiral mixer is used. Buffer tank 110 is also positioned to receive an injection of mature floc. Various forms of mature floc may be used; however, flocs that are at least of the cut-off size of the spiral separator are most desirable, since they will be effectively removed by the spiral separator, for example, in the waste stream, and any particulates from the source water that aggregate onto one of these mature flocs are also removed. In at least one form, floc that has matured for approximately 30 minutes is used provided they are effective in accelerating aggregation to pin floc size. The aggregation rate of small particles can be controlled by the concentration and size of the added mature floc

The output of the buffer tank 110 is connected to a spiral separator 112 which has an effluent output 114. The effluent output 114 directs effluent separated out from the fluid input to the spiral separator to further filtering mechanism 116. The output of the mechanism 116 typically comprises the treated water that may be used in a variety of ways. The spiral separator 112 has a second output line 118 upon which waste water travels. The waste water can be disposed of in appropriate manners or recirculated within the system along a feedback line 120. It should be appreciated that the feedback line 120 is optional to the system; however, in one form, the feedback line 120 provides feedback of the waste water to be reinjected into the system as mature floc. As an alternative to the feedback line 120, mature floc can be generated in a tank 122 and injected into the buffer tank 110. It should also be appreciated that a combination of these approaches can be implemented in any one system.

The spiral separator 112 may take a variety of forms, However, in at least some forms, the separator operates as the spiral separator described, for example, in U.S. Publication No. 2008/0128331 A1, having U.S. Serial No. 11/606.460, filed on November 20, 1006 and entitled "Particle Separation and Concentration System," U.S. Serial No. 11/936,729, filed on November 7, 2007 and entitled "Fluidic Device and Method for Separation of Neutrally Buoyant Particles," and U.S. Serial No. 11/936,753, filed on November 7, 2007 and entitled "Device and Method for Dynamic Processing in Water Purification."

In this regard, the presently described embodiments use a spiral separator that uses the curved channel of a spiral device to introduce a centrifugal force upon particles such as neutrally buoyant particles (e.g. particles having substantially the same density as water, or the fluid in which the particles reside) flowing in a fluid, e.g. water, to facilitate improved separation of such particles from the fluid. It should be understood that, because the mature floc is organic, soluble, and non-granular in nature, the techniques for separating neutrally buoyant particles are particularly useful here. However, other separation techniques are contemplated as well. For example, some of these techniques utilize various forces generated in the flow of the fluid in the spiral channel to separate particles as a function of, for example, geometry of the channel and velocity. These forces include centrifugal forces and pressure driven forces, among others.

In the case of neutrally buoyant particles, as such particles flow through the channel, a tubular pinch effect causes the particles to flow in a tubular band. The introduced centrifugal force perturbs the tubular band (e.g. forces the tubular band to flow in a manner offset from a center of the channel), resulting in an asymmetric inertial migration of the band toward the inner wall of the channel. This force balance allows for focusing and compaction of suspended particulates into a narrow band for extraction. The separation principle contemplated herein implements a balance of the centrifugal and fluidic forces to achieve asymmetric inertial equilibrium near the inner sidewall. Angled impingement of the inlet stream towards the inner wall also allow for earlier band formation due to a Coanda effect where wall friction is used to attach the impinging flow. The migration could also be directed to the outer wall based on the selected operating regime.

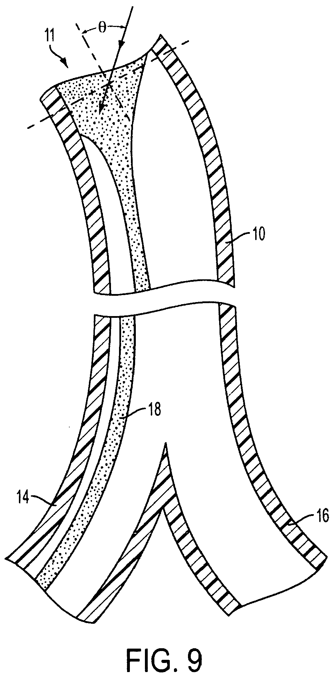

With reference to Figure 9, the channel 10 has an inlet 11 wherein the inlet stream is angled toward the inner wall by an angle $\theta$. The tubular band 18 is thus formed earlier for egress out of the outlet 14. Of course, the second outlet 16 for the remaining fluid in which the band 18 does not flow is also shown. It should be understood that the inlet angle may be realized using any suitable mechanism or technique. It should also be appreciated that only the inlet and outlet portions are shown in Figure 9.

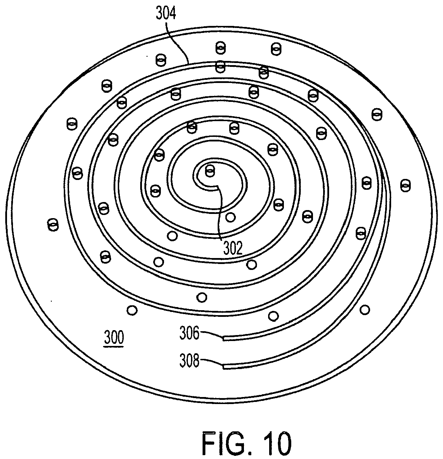

Figure 10 shows a spiral device 300 (which could operate as the spiral separator 112 or spiral mixer 108) having an inlet 302, a spiral channel 304 and outlets 306 and 308. Various configurations of a spiral device may be used, such as those described in the above-noted patent applications. In this regard, for example, it should also be appreciated that the inlet may be positioned on the outer circumference of the spiral or at the center (as shown in Figure 10), depending on the configuration. It should also be understood that the particle stream (such as the band 18 of Figure 9) may be directed through the second outlet 16 based on the selected operating regime.

Likewise, the spiral mixer 108 may take a variety of forms, including that described in U.S. Serial No. 11/936,753, filed on November 7, 2007, entitled "Device and Method for Dynamic Processing in Water Purification,". In this regard, the spiral mixer may take a physical form substantially similar to that of a spiral separator, with some minor and/or functional modifications. So, with reference to Figure 9, the angle $\theta$ at which the fluid is received is tuned to create sufficient turbulence in the channel to mix, rather than separate, the particles of the fluid (as noted above). Also, as noted above, the growth of floc is controlled in the mixing state as a result of shear forces. The outlet may be separated, as shown, or a single unitary outlet.

In operation, with reference back to Figure 4, source water having particles therein is input into and received by the system 100 at a suitable inlet, mesh filtered and mixed with coagulant. This water is then received in a buffer tank 110 wherein a separate injection of mature floc, preferably at or above the cut-off size of the spiral separator 112, is made. In this regard, the spiral separator 112 is operative to segregate the source water into effluent and waste water streams or paths, wherein the waste water includes aggregated particles formed relatively quickly as a result of the injection of mature floc. Upon output from the spiral separator 112, the treated effluent is available for use while the waste fluid can be disposed of or simply recirculated for repeat use as mature floc.

The maturing of the floc and its benefits as described herein can be explained in terms of aggregations kinetics. Aggregation kinetics describes the evolution of aggregates of different sizes over time. If we assume an initial dispersion of identical particles (primary particles of size $a_0$), we can describe the time evolution of the number density $N_k$ of aggregates containing k primary particles by

$$\frac{dN_k}{dt} = \frac{1}{\tau}\left\{ \frac{1}{2}\sum_{i=1}^{k-1} K(i,k-i)N_i N_{k-i} - \sum_{i=1}^{\infty} K(i,k)N_i N_k \right\}. \qquad (1)$$

where $\tau$ is the characteristic time scale of the process and the kernel $K(i, j)$ denotes the efficiency with which particles of size i and $j$ collide with each other. A particle of size i is an aggregate that consist of i primary particles. The number density $N_k$ is defined as the concentration of particles of size k divided by the total concentration of particles at time $t=0$. The first term on the right hand side of (1) describes the formation of an aggregate of size k through the collision of two smaller particles of sizes i and $k-i$. The second term describes the loss of aggregates of size k through collisions with other aggregates. The collision kernels $K(i, j)$ depend on the physical driving force that brings the particles together.

For small (sub-micron) particles diffusion driven (perikinetic) aggregation dominates. For this type of kinetics, the collision frequency is determined by the rate with which two diffusing particles find each other and the collision kernel and time scale are given by

$$K(i,j) = \frac{\left( a_i^{1/3} + a_j^{1/3} \right)^2}{a_i^{1/3} a_j^{1/3}} \qquad (2a)$$

$$\tau_P = \frac{3\eta}{2k_B T N_0}. \qquad (2b)$$

Here, $a_i$ ($a_j$) is the radius of an aggregate of size $i$ ($j$), $k_B$ is the Boltzman factor, T is absolute temperature, $\eta$ is the viscosity of the fluid, and $N_0$ is the total initial particle number density.

Stirring of the colloidal suspension adds a shear induced (orthokinetic) aggregation kinetics. In this case, the collision frequency is calculated as the rate of particles of size i that move through a circle with radius $a_i+a_j$, giving the collision kernel and time scale

$$K(i,j) = \left( \frac{a_i + a_j}{a_1} \right)^3 \qquad (3a)$$

$$\tau_O = \frac{3}{4\dot{\gamma}a_1^3 N_0} = \frac{\pi}{\dot{\gamma}\phi} \cdot \qquad \Bigg| \qquad \text{(3b)}$$

where $\dot{\gamma}$ is the shear rate, and $\phi$ is the solids volume fraction.

As can be seen from Eqn. (3b), the rate for orthokinetic aggregation increases with the size of the particles, and for a typical shear rate of 1/s exceeds the perikinetic aggregation rate for particles in excess of 1μm.

In a situation where a species of large particles (>1μm) is mixed together with small particles (<1μm), we observe two competing aggregation kinetics. The small particles will grow together at the perikinetic aggregation rate. At the same time, the larger particles will "sweep up" the smaller particles at the orthokinetic aggregation rate. The second process is described by

$$\frac{dN_s}{dt} = -\tau_O^{-1}\left(1 + \frac{r_l}{r_s}\right)^3 N_s N_l = -\tau_{ls}^{-1} N_s . \qquad \text{(4)}$$

where $\tau_{ls} = \pi/\dot{\gamma}\phi_l$, and $\phi_l$ is the volume fraction of the larger particles.

If we neglect aggregation between large particles (i.e. we assume $N_l$ to be constant), we can integrate Eqn (4) to obtain the number density for the smaller particles

$$N_s(t) = N_s(t=0)e^{-t/\tau_{ls}} . \qquad \text{(5)}$$

Here, the time scale $\tau_{ls}$ is independent of the size and/or concentration of the smaller particles, but solely given by the volume fraction of the larger particles and the stirring rate.

Table 1 shows typical time scales for perikinetic and orthokinetic aggregation. As expected, the perikinetic aggregation rate is faster for sub-micron particles. Since in this aggregation mode many particle-particle collisions have to occur before the aggregates reach a size for easy removal (i.e. before they are larger than a few μm), these aggregation times are very low bounds for the actual aggregation time required in a water treatment process.

| as [um] | Ns [NA] | tau_p [s] | tau_o [s] |
|---------|---------|-----------|-----------|
| 0.03 | 1.00E-03 | 6.02E-04 | 5.91E-01 |
| 0.03 | 1.00E-06 | 6.02E-01 | 5.91E+02 |
| 0.03 | 1.00E-09 | 6.02E+02 | 5.91E+05 |
| 0.3 | 1.00E-03 | 6.02E-04 | 5.91E-04 |
| 0.3 | 1.00E-06 | 6.02E-01 | 5.91E-01 |
| 0.3 | 1.00E-09 | 6.02E+02 | 5.91E+02 |

Table 2 shows typical time scales for "sweep" aggregation for different sizes and concentrations of the sweep particles. Even at low concentrations of the sweep particles, time scales are comparable to those of perikinetic aggregation. Combined with the fact that in sweep mode a single collision of a small particle with a large one results in an aggregate that is easily separated out, this results in a much higher removal efficiency for sweep mode aggregation.

| al [um] | Nl [NA] | tau_l [s] |
|---------|---------|-----------|
| 3 | 1.00E-03 | 5.91E-07 |

(continued)

| al [um] | NI [NA] | tau_l [s] |
|---|---|---|
| 3 | 1.00E-06 | 5.91E-04 |
| 3 | 1.00E-09 | 5.91E-01 |
| 30 | 1.00E-03 | 5.91E-10 |
| 30 | 1.00E-06 | 5.91E-07 |
| 30 | 1.00E-09 | 5.91E-04 |

Two sets of experiments were performed to validate the presently described embodiments: (1) Jar Test; and (2) in-line floc separation.

**Jar Test --** The Jar Test is a standard method used in the water industry to determine chemical dosage for clarification of source waters. Typical test volumes are 2L with determined dosage being scaled up for the operational flow rates. The protocol for a standard Jar Test includes:

- 2 minute rapid mix;
- 2.3 ml of 1 N NaOH (as base) and 110 mg/L of 1% Alum (as coagulant) added to source water with starting turbidity of 26 NTU;
- 28 minutes slow mix; and,
- Mixing stopped at 30 min and flocs allowed to settle out.

A modified Jar Test Protocol to test the presently described embodiments includes:

- 2 minute rapid mix;
- 2.3 ml of 1 N NaOH (as base) and 110 mg/L of 1% Alum (as coagulant) added to source water with starting turbidity of 26 NTU;
- 28 minutes slow mix; and,
- First batch of 30 min floc added at 2 min (100 ml) and second batch is added at 6 min (50 ml). All flocs are injected in the slow mixing regime. A total of 150 ml of 30 min flocs are added to the jar; and,
- Mixing stopped at 30 min and flocs allowed to settle.

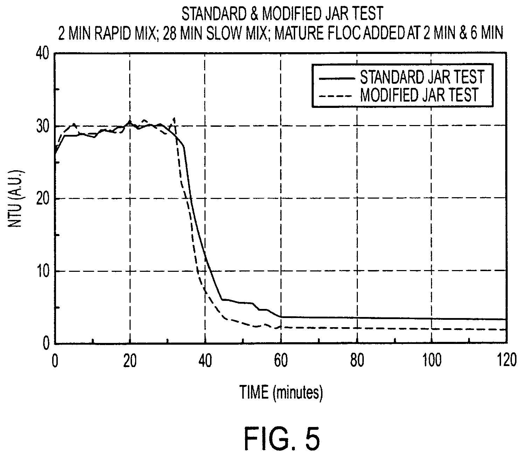

Figure 5 shows the measured turbidity reduction as a function of time for the modified and standard Jar Test experiments. The steeper fall-off of the curve for the modified Jar Test immediately after mixing is stopped at 30 mins shows more rapid aggregation and sedimentation. The asymptotic value of turbidity is also a couple of NTU lower showing more efficient turbidity reduction.

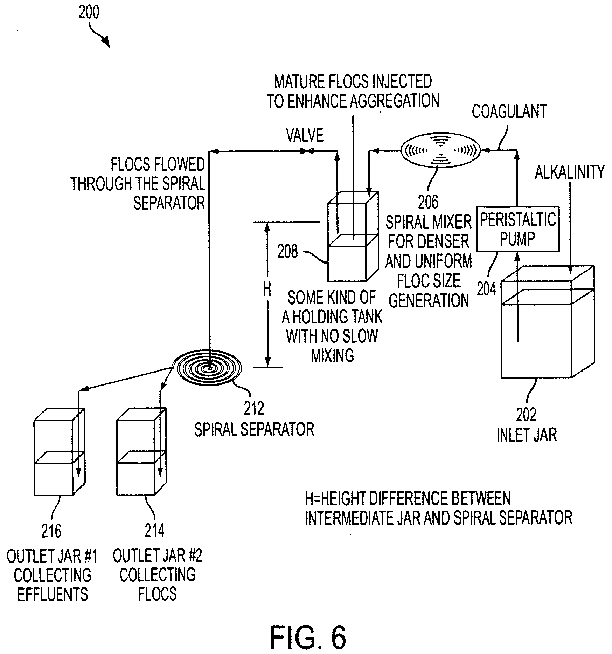

**In-line Floc Separation -** The schematic for in-line floc separation is shown in Figure 6. With reference to the system 200, starting from the right, 1 N NaOH is added to the input water from input jar 202 and is pumped by a pump 204 through a spiral mixer 200 into a second buffer tank 208. Coagulant is injected just before the spiral mixer to promote faster agglomeration and to produce uniformly sized floc. More mature 30 minute floc is injected into the buffer tank to act as seed for more rapid aggregation. A total of 150 ml of 30 min flocs are added to the tank. The water is then flowed through the spiral separator 212, which is located at a height H below the second buffer tank 208. This gravity-driven flow allows operation without pumping. The fluid is separated and collected into effluent and waste streams and held in effluent jar 216 and floc collection jar 214. NTU measurements are performed on the collected effluent and waste streams over time to determine turbidity reduction. A buffer time of 4 minutes is used to allow for fluid impedance matching between the mixer and the separator.

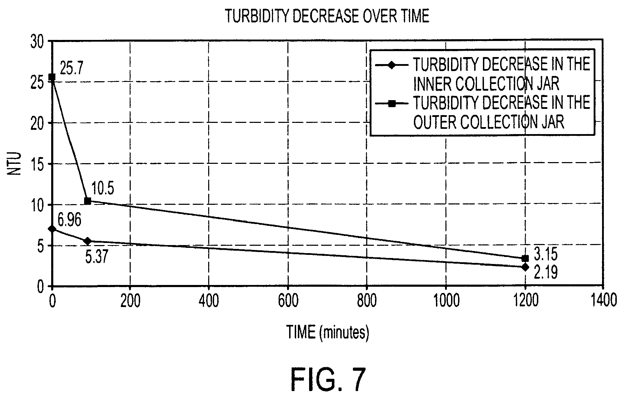

Measured turbidity in the collected effluent and waste streams for 4 minute floc are shown in Figure 7. The waste stream (top curve) shows initially high turbidity which drops to the asymptotic value as flocs sediment out of the liquid. The effluent stream (bottom curve) shows much lower starting turbidity which also continues to drop to the asymptotic value. The ideal curve should be a flat line of much lower turbidity (compared to that of the waste stream) if all the flocs are removed by the spiral separator. This curve shows a small amount of tiny floc, below cut-off separation, which gets into the effluent stream and continue to mature and sediment out. More work can be performed to optimize both dosage and injection rate to result in the desired flat line behavior.

Additional experiments were performed to demonstrate separation of both 30 minute and 4 minute floc. A setup where 30 minute floc was separated using gravity by placing the flocs on the shelf some 4 feet above the plane of the spiral separator was conducted. The collected effluent was clear compared to that of the waste stream. Comparisons of separated and collected effluent and waste streams for both 30 minute and 4 minute flocs shows that collected effluent is clearer using 30 minute floc. Table 3 summarizes the comparison of process times for conventional water treatment compared to the proposed spiral system.

| Step | Conv. Process Time (min) | Spiral Process Time (min) |
|---|---|---|
| Flash Mix | 0.5 | 0.083 |
| Flocculation (slow mix) | 30.0 | 4.0 |
| Sedimentation/Separation | 600.0 | 10.0 |

Particle concentrations for range of particles sizes for seeded and unseeded cases are shown. The seeded case results in lower concentrations of small particles due to enhanced aggregation with larger seed particles. The seeded case also shows a peak in the 25-30um rang; indicating the average size of flocs immediately after mixing is stopped.

By assuming that NTU is proportional to volume fraction and that shear induced motion is dominant to sedimentation during mixing, we can infer that particles will not sediment if $t_{sed} > t_{mix}$. This gives a criterion for the largest particle to stay in solution during mixing:

$$r_{max} = \frac{9\eta}{2\Delta\rho g} G = \alpha G \qquad (6)$$

where G is the shear rate and $\Delta\rho|_{is}$ the difference between the particle and water density. Parameter $\alpha|$ is estimated from empirical data in the time interval between the end of mixing and the first NTU measurement. The volume fraction is given by:

$$\phi(t) = \int_0^{R(t)} dr \frac{4\pi r^3}{3} \frac{3r^2}{r_0^3} N(r) \qquad (7)$$

Particle size as a function of time, R(t), decreases as particles sediment, and is derived as:

$$R(t) = \sqrt{\frac{\alpha H}{t}} \qquad (8)$$

The corresponding particle density is estimated as:

$$N\left(r = \sqrt{\frac{\alpha H}{t}}\right) = -\frac{d\phi}{dt} \frac{t^4}{2\pi} \left(\frac{r_0}{\alpha H}\right)^3 \qquad (9)$$

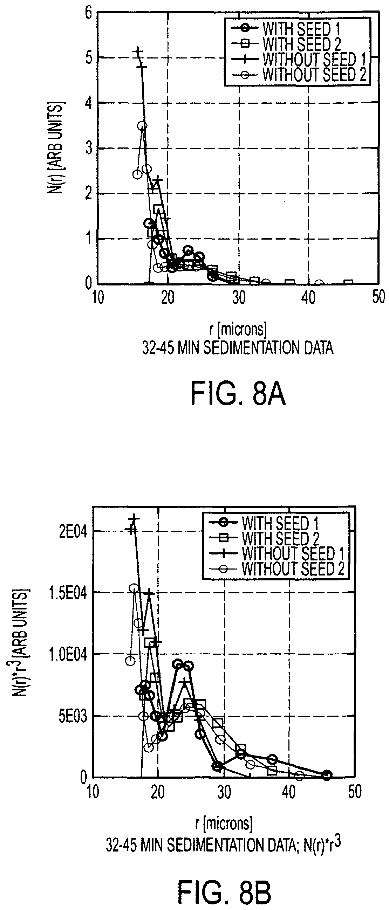

The particle size distributions extracted from fit to empirical data in the 32-45 min time interval is shown in Figure 8 for two sets of repeated experiments comparing injection of seed particles with a standard Jar Test. Comparing the "seeded" cases against the "standard", we see that there are fewer small particles in the "seeded" cases due to aggregation with larger particles. The distinct peak of "seeded" cases at 25 $\mu$m indicates the nominal size of particles at the end of mixing. The right graph is weighted by multiplying with particle volume to highlight that most of the particulate matter of the source water is now captured as [AV1]larger aggregates.

The presently described embodiments result in at least the following advantages:

X In-line coagulation, flocculation, and separation water treatment system without flocculation and sedimentation basins and much reduced process time
X Injection of mature floc to seed and accelerate particle aggregation for floc formation
X Mature floc may be prepared off-line and injected into the buffer tank on demand
X More mature floc may also be re-circulated from downstream for injection into the buffer tank as needed
X No need to recover seed particles
X No additional pumping equipment or power for seed recovery
X Coagulant used for mature floc off-set by up to 50% reduction in coagulant dosage
X Seeding is also relevant for other applications to accelerate aggregation

It will be appreciated that several of the above-disclosed and other features and functions, or alternatives thereof, may be desirably combined into many other different systems or applications.

## Claims

1. A system (100) for treatment of water, the system comprising:

    an inlet (102) operative to receive source water having particles therein;
    a spiral mixer (108) operative to mix the source water with coagulant and alkalinity material;
    a buffer tank (110) operative to receive an output of the mixer (108) and receive mature floc;
    a spiral separator (112, 300) having a curved channel (10, 304) configured to introduce a centrifugal force upon particles flowing in a fluid to facilitate improved separation of such particles from the fluid and operative to segregate contents of the buffer tank (110) into effluent and waste water having aggregated particles therein;
    an outlet operative to provide a first path (114, 306) for the effluent and a second path (118, 308) for the waste water having the aggregated particles.

2. The system (100) as set forth in claim 1 wherein the inlet (102) comprises a mesh filter (104).

3. The system (100) as set forth in claim 1 further comprising a feedback line (120) between the second path (118) and the buffer tank (110).

4. The system (100) as set forth in claim 1, further comprising a filter device (116) operative to receive and filter the effluent.

5. A method for treatment of water, the method comprising:

    receiving source water having particles therein;
    adding alkalinity to set water pH;
    spiral mixing the source water with coagulant material with a spiral mixer(108).
    injecting mature floc into the mixture of the source water and the coagulant material in a buffer tank (110), the mature floc promoting aggregation of the particles in the source water;
    spiral separating the source water into effluent and waste water having aggregated particles by using a spiral separator (112, 300) having a curved channel (10, 304) configured to introduce a centrifugal force upon particles flowing in a fluid to facilitate improved separation of such particles from the fluid and operative to segregate contents of the buffer tank (110) into effluent and waste water having aggregated particles therein,
    wherein an outlet is operative to provide a first path (114, 306) for the effluent and a second path (118, 308) for the waste water having the aggregated particles.

6. The method as set forth in claim 5, wherein the age of the mature floc is minimized to allow optimal aggregation of small particles which is controlled by both size and concentration of the aged floc.

**7.** The method as set forth in claim 5, further comprising feeding the waste water back to be injected as mature floc in the injecting step.

**Patentansprüche**

**1.** System (100) zur Aufbereitung von Wasser, wobei das System umfasst:

einen Einlass (102), der betrieben werden kann zum Empfangen von Quellwasser mit darin enthaltenen Partikeln,
einen Spiralmischer (108), der betrieben werden kann zum Mischen des Quellwassers mit einem Gerinnungsmittel und einem Alkalinitätsmaterial,
einen Speichertank (110), der betrieben werden kann zum Empfangen einer Ausgabe des Mischers (108) und zum Empfangen von ausgereiften Flocken,
einen Spiralseparator (112, 300) mit einem gekrümmten Kanal (10, 304), der konfiguriert ist zum Ausüben einer Zentrifugalkraft auf in einem Fluid fließende Partikel, um eine verbesserte Trennung derartiger Partikel von dem Fluid zu bewerkstelligen, und betrieben werden kann zum Trennen des Inhalts des Speichertanks (110) in Nutzwasser und Abwasser mit darin aggregierten Partikeln, und
einen Auslass, der betrieben werden kann zum Vorsehen eines ersten Pfads (114, 306) für das Nutzwasser und eines zweiten Pfads (118, 308) für das Abwasser mit den aggregierten Partikeln.

**2.** System (100) nach Anspruch 1, wobei der Einlass (102) ein Maschenfilter (104) umfasst.

**3.** System (100) nach Anspruch 1, das weiterhin eine Rückführleitung (120) zwischen dem zweiten Pfad (118) und dem Speichertank (110) umfasst.

**4.** System (100) nach Anspruch 1, das weiterhin eine Filtereinrichtung (116) umfasst, die betrieben werden kann zum Empfangen und Filtern des Nutzwassers.

**5.** Verfahren zur Aufbereitung von Wasser, wobei das Verfahren umfasst:

Empfangen von Quellwasser mit darin enthaltenen Partikeln,
Hinzufügen einer Alkalinität, um den pH-Wert des Wassers zu setzen,
Spiralmischen des Quellwassers mit einem Gerinnungsmittel mittels eines Spiralmischers (108),
Einführen von ausgereiften Flocken in die Mischung aus dem Quellwasser und dem Gerinnungsmaterial in einem Speichertank (110), wobei die ausgereiften Flocken eine Aggregation der Partikel in dem Quellwasser fördern,
Spiraltrennen des Quellwassers in Nutzwasser und Abwasser mit darin aggregierten Partikeln unter Verwendung eines Spiralseparators (112, 300) mit einem gekrümmten Kanal (10, 304), der konfiguriert ist zum Ausüben einer Zentrifugalkraft auf in einem Fluid fließende Partikel, um eine verbesserte Trennung derartiger Partikel von dem Fluid zu bewerkstelligen, und betrieben werden kann zum Trennen des Inhalts des Speichertanks (110) in Nutzwasser und Abwasser mit darin aggregierten Partikeln,
wobei ein Auslass betrieben werden kann zum Vorsehen eines ersten Pfads (114, 306) für das Nutzwasser und eines zweiten Pfads (118, 308) für das Abwasser mit den aggregierten Partikeln.

**6.** Verfahren nach Anspruch 5, wobei das Alter der ausgereiften Flocken minimiert ist, um eine optimale Aggregation kleiner Partikel zu gestatten, die durch die Größe und die Konzentration der ausgereiften Flocken gesteuert wird.

**7.** Verfahren nach Anspruch 5, das weiterhin das Rückführen und Einführen des Abwassers als ausgereifte Flocken in dem Einführschritt umfasst.

**Revendications**

**1.** Système (100) pour le traitement de l'eau, le système comprenant :

une entrée (102) opérationnelle pour recevoir de l'eau de source contenant des particules ;
un mélangeur à spirale (108) opérationnel pour mélanger l'eau de source avec un matériau coagulant et alcalin ;

un réservoir tampon (110) opérationnel pour recevoir une sortie du mélangeur (108) et recevoir le floc mature ; un séparateur à spirale (112, 300) ayant un canal incurvé (10, 304) configuré pour introduire une force centrifuge sur les particules s'écoulant dans un fluide afin de faciliter la séparation améliorée de ses particules du fluide et opérationnel pour diviser le contenu du réservoir tampon (110) en effluent et en eau résiduaire ayant des particules agglomérées dans cette dernière ; une sortie opérationnelle pour fournir une première trajectoire (114, 306) pour l'effluent et une seconde trajectoire (118, 308) pour l'eau résiduaire ayant les particules agglomérées.

2. Système (100) selon la revendication 1, dans lequel l'entrée (102) comprend un filtre en mailles (104).

3. Système (100) selon la revendication 1, comprenant en outre une ligne de rétroaction (120) entre la seconde trajectoire (118) et le réservoir tampon (110).

4. Système (100) selon la revendication 1, comprenant en outre un dispositif de filtre (116) opérationnel pour recevoir et filtrer l'effluent.

5. Procédé pour le traitement de l'eau, le procédé comprenant les étapes consistant à :

recevoir l'eau de source contenant des particules ;
ajouter l'alcalinité afin de régler le pH de l'eau ;
mélanger en spirale l'eau de source avec un matériau coagulant avec un mélangeur à spirale (108) ;
injecter le floc mature dans le mélange d'eau de source et de matériau coagulant dans un réservoir tampon (110), le floc mature favorisant l'agrégation des particules dans l'eau de source ;
séparer en spirale l'eau de source en effluent et en eau résiduaire ayant des particules agglomérées en utilisant un séparateur à spirale (112, 300) ayant un canal incurvé (10, 304) configuré pour introduire une force centrifuge sur les particules s'écoulant dans un fluide afin de faciliter la séparation améliorée de ces particules du fluide et opérationnel pour diviser le contenu du réservoir tampon (110) en effluent et en eau résiduaire contenant les particules agglomérées,
dans lequel une sortie est opérationnelle pour fournir une première trajectoire (114, 306) pour l'effluent et une seconde trajectoire (118, 308) pour l'eau résiduaire ayant des particules agglomérées.

6. Procédé selon la revendication 5, dans lequel l'âge du floc mature est minimisé pour permettre l'agrégation optimale des petites particules qui est contrôlée à la fois par la taille et la concentration du floc vieilli.

7. Procédé selon la revendication 5, comprenant en outre l'étape consistant à ramener l'eau résiduaire à injecter sous la forme de floc mature à l'étape d'injection.

FIG. 1

FIG. 2

FIG. 3

FIG. 4

FIG. 5

200

MATURE FLOCS INJECTED
TO ENHANCE AGGREGATION

COAGULANT

VALVE

FLOCS FLOWED
THROUGH THE SPIRAL
SEPARATOR

ALKALINITY

208

206
SPIRAL MIXER
FOR DENSER
AND UNIFORM
FLOC SIZE
GENERATION

PERISTALTIC
PUMP

204

SOME KIND OF
A HOLDING TANK
WITH NO SLOW
MIXING

H

212
SPIRAL SEPARATOR

202
INLET JAR

216
OUTLET JAR #1
COLLECTING
EFFLUENTS

214
OUTLET JAR #2
COLLECTING
FLOCS

H=HEIGHT DIFFERENCE BETWEEN
INTERMEDIATE JAR AND SPIRAL SEPARATOR

FIG. 6

FIG. 7

32-45 MIN SEDIMENTATION DATA

FIG. 8A

32-45 MIN SEDIMENTATION DATA; N(r)*r$^3$

FIG. 8B

FIG. 9

FIG. 10

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004103916 A
- WO 8901357 A
- US 20040149662 A
- US 20080128331 A1
- US 11606460 B
- US 11936729 B
- US 11936753 B